# FASCICULE DE BREVET EUROPEEN

(11) **EP 0 649 477 B1**
(45) Date de publication et mention de la délivrance du brevet: **22.04.1998**
(21) Numéro de dépôt: 94915588.1
(22) Date de dépôt: 05.05.1994
(51) Int. Cl.: C21C 5/52, F27B 3/08, F27D 11/04

(54) **FOUR ELECTRIQUE POUR FUSIONNER DE FERRAILLE**
ELEKTROOFEN ZUM SCHMELZEN VON SCHROTT
ELECTRIC FURNACE FOR MELTING SCRAP IRON

(30) Priorité: 13.05.1993 FR 9305785
(43) Date de publication de la demande: 26.04.1995
(73) Titulaire: KVAERNER CLECIM, 95864 Cergy Pontoise Cedex (FR)
(72) Inventeur: FORESTIER, Guy, F-42170 Saint-Just-Saint-Rambert (FR)
(74) Mandataire: Phélip, Bruno
(86) Numéro de dépôt international: FR9400523
(87) Numéro de publication internationale: WO9426938

(56) Documents cités:
- EP-A- 0 255 793
- EP-A- 0 258 101
- WO-A-91/18120
- WO-A-92/10594
- US-A- 5 204 873
- IRON AND STEEL ENGINEER, vol.69, no.7, Juillet 1992, PITTSBURGH US pages 43 - 47, XP000293894 M.HAISSIG ET AL. 'New high-performance electric arc furnace concept'

## Description

L'invention a pour objet un four à arc électrique pour la production de métal fondu, en particulier d'acier liquide.

On utilise depuis longtemps, et de plus en plus, des fours électriques à arc pour la production d'acier par fusion de ferraille ou d'une autre matière première ferreuse, par exemple un minerai préréduit.

D'une façon générale, un four à arc électrique comprend une cuve de fusion fermée, à sa partie supérieure, par un couvercle amovible en forme de voûte et associée à une ou plusieurs électrodes reliées à une source de courant.

La cuve comprend un fond en forme de cuvette recouvert de matière réfractaire et une paroi latérale refroidie, sensiblement cylindrique, dont la partie inférieure se raccorde au bord supérieur de la cuvette.

Chaque électrode est fixée à l'extrémité d'un bras s'étendant en porte-à-faux au-dessus de la cuve et pénètre verticalement dans celle-ci en traversant le couvercle par un orifice ménagé à cet effet.

Pour réaliser une opération de coulée, on ouvre le four en écartant le couvercle et les électrodes, généralement par rotation autour d'un axe vertical. La ferraille brute est chargée dans le four au moyen de bennes ou "paniers" de transport qui sont pris en charge et transportés au-dessus du four par un pont roulant circulant au-dessus de toute l'installation, chaque panier étant muni d'un fond ouvrant pour le déversement de la ferraille dans le four.

On introduit ainsi dans la cuve, au moyen d'un ou plusieurs paniers, une certaine quantité de ferraille appelée "charge".

Le four est alors refermé et les électrodes sont descendues dans le four. Le courant est établi et les arcs électriques formés entre les électrodes et la ferraille produisent la fusion de celle-ci.

Le métal fondu est recueilli dans la cuvette et forme un bain recouvert d'une couche de laitier. Généralement, le four est monté basculant sur des appuis arrondis et le métal est coulé par déversement ou bien par un trou de coulée ménagé dans le fond de la cuvette et fermé par une quenouille ou une busette extérieure.

Toutes ces opérations déterminent une forte usure de la sole en matière réfractaire recouvrant la cuvette dont l'état est vérifié après chaque coulée, le réfractaire étant réparé ou remplacé périodiquement.

La ferraille peut être chargée froide dans le four, mais ceci entraîne une consommation excessive d'énergie électrique pour faire passer la charge de la température ambiante à la température de fusion.

C'est pourquoi on préfère généralement utiliser une source d'énergie moins onéreuse pour réchauffer la ferraille avant de la charger dans le four.

En particulier, comme la fusion de la ferraille produit, à l'intérieur du four, un volume important de fumées très chaudes, on cherche, généralement, à récupérer le pouvoir calorifique de ces fumées pour réchauffer la ferraille avant son introduction dans le four.

Divers moyens ont été imaginés à cet effet.

Par exemple, le four peut être associé à une enceinte fermée placée sur le circuit d'évacuation des fumées et dans laquelle sont placés un ou plusieurs paniers en attente de chargement. Cette enceinte est donc munie d'une porte de grande dimension qui doit être ouverte chaque fois que l'on introduit ou que l'on retire un nouveau panier. Ces manoeuvres diminuent la productivité et, en outre, entraînent un fort dégagement de fumées dans l'atelier à chaque ouverture de la porte.

Pour gagner du temps et diminuer les risques de pollution, on a proposé d'utiliser une enceinte de préchauffage mobile et munie d'un fond ouvrant, qui peut ainsi constituer elle-même un organe de chargement se déplaçant entre une position de préchauffage à côté du four dans laquelle l'enceinte est branchée sur le circuit d'évacuation des fumées et une position de chargement du four au-dessus de celui-ci.

La demande EP 0514.526 de la même Société décrit, par exemple, une installation de ce type perfectionnée de façon à simplifier les circuits de gaz et réduire les risques de pollution.

Toutefois, la voûte du four doit évidemment être ouverte pour y placer la ferraille réchauffée et l'on ne peut éviter une forte émission de fumée ainsi que des projections d'acier et de laitier lorsque la cuve n'est pas vide au moment du déversement de la ferraille.

Or, la quantité de métal liquide qui doit être produite dans le four avant chaque coulée nécessite, normalement, la fusion de plusieurs charges qui sont introduites successivement dans le four et il en résulte que la cuve doit être ouverte assez souvent, ce qui augmente les risques de pollution.

D'une façon générale, en effet, les dimensions d'un four électrique sont déterminées en fonction de la production globale souhaitée et de la puissance électrique dont on dispose. Par ailleurs, chaque coulée est liée à diverses opérations et nécessite, généralement, un basculement du four et, par conséquent, l'arrêt de celui-ci. On a donc intérêt, pour augmenter la productivité, à réduire le nombre de coulées au cours d'une journée de travail.

D'autre part, l'acier produit dans le four est utilisé, en aval de celui-ci, dans des installations, notamment de coulée continue, dont les capacités ont été accrues et qui nécessitent la coulée en une seule opération d'une grande quantité de métal.

On a donc été amené à augmenter la capacité des fours électriques qui, actuellement, sont prévus pour une production de 100 à 150 tonnes d'acier à chaque coulée.

Or, les dimensions que l'on donne, généralement, à la cuve, ne permettent pas, normalement, d'introduire en une seule fois dans celle-ci la quantité de ferraille nécessaire à une coulée de 120 tonnes ou plus, en raison de la très grande différence de densité entre la ferraille brute et le métal liquide.

Avec les installations de type connu, l'élaboration d'une coulée s'effectue donc de la façon suivante.

Une première charge de ferraille est d'abord préchauffée puis introduite dans le four dont la voûte a été ouverte. Celle-ci est alors refermée et les électrodes introduites pour procéder à la fusion. Pendant ce temps, une seconde charge de ferraille est préchauffée grâce aux fumées sortant du four.

Après la fusion de cette première charge, la voûte du four est de nouveau ouverte et la seconde charge préchauffée est introduite dans la cuve au-dessus du premier bain de métal. La voûte est alors de nouveau refermée et l'on procède à la fusion de la seconde charge.

Le métal fondu est recueilli dans la cuvette et s'ajoute à celui correspondant à la première charge. On fond ainsi successivement le nombre de charges nécessaires pour une coulée.

Ces manutentions de ferraille et ces manoeuvres d'ouverture de la voûte du four sont des causes de perte de temps et de chaleur et, par conséquent, diminuent le rendement de l'installation. En outre, comme on l'a indiqué plus haut, il en résulte un risque de pollution par dégagement des fumées.

Pour éviter cet inconvénient, on a proposé de stocker une certaine quantité de ferraille dans une enceinte d'assez grande dimension débouchant directement dans la cuve et traversée par les fumées, la ferraille ainsi préchauffée étant introduite progressivement dans le four sans ouverture de celui-ci.

Le document FR-A-2.498.309 de la même Société décrit, par exemple, un four à arc s'ouvrant vers l'arrière sur une chambre formant une hotte d'évacuation des fumées et dans laquelle est déversée une grande quantité de ferraille qui peut être poussée périodiquement dans le bain de métal.

Le document WO 91/18120 décrit d'autre part une installation comprenant deux fours ayant chacun un couvercle sur lequel est fixée une chambre latérale débouchant sur le côté du four par un orifice latéral et formant une cheminée dans laquelle est stockée une certaine quantité de ferraille qui est introduite par la partie supérieure de la cheminée et descend progressivement dans le bain de métal après avoir été chauffée au contact des fumées s'échappant par la cheminée.

De telles dispositions compliquent cependant la réalisation et l'exploitation du four. D'autre part, malgré l'utilisation d'une chambre de stockage de grande dimension, il faut encore ouvrir périodiquement celle-ci pour y introduire une nouvelle quantité de ferraille au fur et à mesure de sa fusion et l'on n'évite pas complètement le risque de dégagement de fumées.

L'invention a pour objet un four à arc perfectionné permettant de remédier à l'ensemble de ces inconvénients.

L'invention concerne donc, d'une façon générale, un four électrique à courant continu pour la fusion d'une matière brute ferreuse telle que de la ferraille, comprenant une cuve fermée à sa partie supérieure par un couvercle amovible pour l'introduction d'une charge de matière à fondre, au moins une électrode consommable placée sensiblement dans l'axe de la cuve et montée coulissante verticalement pour descendre à l'intérieur de la cuve en passant par au moins un orifice du couvercle, au moins une électrode fixe placée dans le fond de la cuve et au moins une source de courant continu ayant deux pôles reliés respectivement à l'électrode consommable et à l'électrode fixe, ladite cuve comprenant un fond recouvert d'une sole en matière réfractaire formant une cuvette ayant un bord relevé et présentant une profondeur et une section transversale maximale, et une paroi latérale placée sensiblement dans le prolongement du bord de la cuvette et limitant un espace cylindrique ayant une section transversale sensiblement égale à la section maximale de la cuvette.

Conformément à l'invention, la hauteur et la section transversale de la cuvette étant déterminées en fonction de conditions d'exploitation, de façon que la capacité de la cuvette corresponde à une quantité imposée de métal fondu à couler en une seule opération de coulée, la paroi latérale de la cuve s'étend sur une hauteur telle que, compte tenu des différences de densité entre la ferraille et le métal fondu, la cuve puisse contenir une charge de ferraille suffisante pour fournir, en une seule opération de fusion, ladite quantité imposée de métal fondu, correspondant à la capacité maximale de la cuvette.

L'invention est liée aux développements récents de la technique des fours à courant continu et, en particulier, à l'augmentation de leur capacité de production.

On sait que les caractéristiques d'un four de fusion sont déterminées essentiellement en fonction de la production globale souhaitée et de la puissance électrique dont on peut disposer.

Auparavant, il avait semblé nécessaire d'utiliser, pour les fours électriques de grande capacité, une alimentation en courant alternatif utilisant donc, normalement, trois électrodes consommables en graphite. Depuis quelque temps, cependant, la Société déposante a pu, grâce à plusieurs perfectionnements, utiliser le courant continu même pour des productions importantes, par exemple de 100 à 150 tonnes par coulée, un tel mode d'alimentation présentant de nombreux avantages.

En particulier, alors que, dans un four à courant alternatif, les électrodes entre lesquelles se forment les arcs sont soumises à des efforts mécaniques et magnétiques plus ou moins aléatoires, il est possible, dans un four à courant continu, de mieux contrôler les effets magnétiques. En particulier, les dispositions décrites dans les brevets FR 2.602.320 ou 2.602.351 de la même Société permettent, par des orientations judicieuses des conducteurs de retour, de contrôler la direction des arcs électriques.

De plus, en courant continu, il est possible, même pour de très fortes intensités, d'utiliser une électrode unique de forte section, qui est plus résistante, et, en outre, moins sollicitée transversalement par la ferraille du fait qu'elle descend progressivement dans l'axe de la charge. On a donc observé que l'on pouvait admettre une plus grande longueur de pénétration de l'électrode dans la cuve sans risque notable de rupture, le rapport de la longueur libre de l'électrode à son diamètre pouvant aller jusqu'à dix. Il est ainsi possible de donner à la cuve une hauteur suffisante pour que le volume de ferraille introduit en une seule fois fournisse la quantité de métal nécessaire à une coulée, même pour une forte production.

De ce fait, il n'est plus nécessaire d'ouvrir la voûte du four entre deux opérations de coulée, le chargement se faisant en une seule fois. Les pertes de chaleur sont ainsi évitées et la pollution diminuée.

En pratique, la hauteur de la paroi latérale est telle que le volume limité par ladite paroi latérale soit compris entre six et douze fois la capacité de la cuvette correspondant à la quantité imposée de métal fondu.

Le rendement thermique est également amélioré du fait que la charge de ferraille reste plus longtemps à l'intérieur du four au contact des fumées qui s'échappent par l'orifice de la voûte.

Par ailleurs, selon une autre caractéristique importante de l'invention, la cuve du four est munie de moyens de chauffage additionnels permettant de réaliser le préchauffage de la charge à l'intérieur de la cuve. De ce fait, la charge peut être introduite à froid dans le four, ce qui diminue le risque de dégagement de polluants.

Dans un premier mode de réalisation, la production d'une coulée de métal se réalise en deux phases de la façon suivante :

Après introduction dans la cuve de la charge de ferraille correspondant à une coulée et fermeture du couvercle, on soumet ladite charge à un préchauffage par apport de chaleur dans la cuve, dans une première phase du procédé pour laquelle le four est isolé de la source de courant, l'électrode consommable étant soulevée au-dessus du couvercle, et l'orifice d'introduction fermé par un couvercle, puis, dans une seconde phase du procédé, on réalise la fusion de la ferraille préchauffée par introduction progressive de l'électrode dans la cuve, le four étant relié à la source de courant électrique.

L'apport de chaleur nécessaire au préchauffage est, de préférence, réalisé par des moyens de chauffage additionnels disposés sur la périphérie de la cuve, par exemple un ou plusieurs brûleurs répartis sur la périphérie de la cuve et débouchant à la base de la paroi latérale.

Mais on peut aussi ménager, juste au dessus de la jonction de la paroi latérale avec le fond, au moins une tubulure d'introduction de gaz chauds reliée, par exemple, à une chambre de combustion munie d'un brûleur.

Il faut noter, d'autre part, que les moyens de chauffage additionnels disposés sur la périphérie de la cuve peuvent fonctionner pendant l'opération de fusion par arc électrique.

C'est pourquoi, dans un autre mode de réalisation, la première phase de préchauffage peut être supprimée, le courant étant établi dès la fermeture de la voûte après le chargement. L'électrode consommable descend progressivement dans la cuve en pénétrant dans la charge de ferraille, la partie centrale de celle-ci étant fondue au fur et à mesure de la progression de l'électrode, alors que la partie annulaire de la charge qui se trouve le long de la paroi latérale est réchauffée par les gaz chauds produits par les brûleurs disposés à la base de la paroi latérale et qui remontent le long de celle-ci pour s'échapper par l'orifice de sortie ménagée dans le couvercle.

Mais l'invention sera mieux comprise par la description détaillée de certains modes de réalisation particuliers donnés à titre d'exemple et représentés sur les dessins annexés.
- La Figure 1 est une vue schématique en coupe d'un four électrique perfectionné selon l'invention.
- La Fig. 2 est une vue schématique en coupe d'une variante de réalisation.

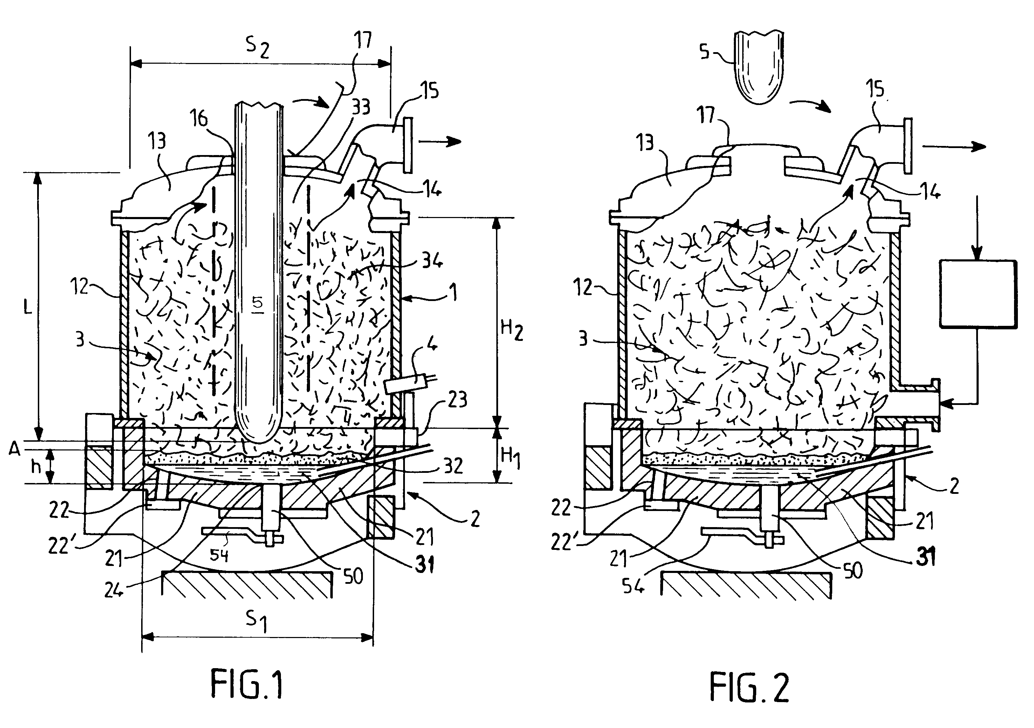

Sur la Figure 1, on a représenté, en élévation, un four électrique perfectionné selon l'invention.

Un tel four de fusion électrique est de type classique et comprend donc, d'une façon générale, une cuve 1 ayant un fond 2 recouvert de matière réfractaire et constituant une sole en forme de cuvette 21 et limitée par une paroi latérale 12 fermée à sa partie supérieure par un couvercle amovible 13.

Le four est avantageusement du type basculant, le fond 2 étant monté dans un bâti reposant sur une socle fixe par des parties d'appui arrondies. Par ailleurs, le four est muni des dispositions habituelles pour la coulée du métal fondu et du laitier.

En particulier, le four peut être muni de deux becs de coulée placés de part et d'autre de l'axe de basculement perpendiculaire au plan de la Figure et permettant la coulée de l'acier et l'évacuation du laitier en faisant basculer le four, respectivement, vers l'avant ou vers l'arrière.

On peut aussi, comme on l'a représenté sur les Figures, utiliser un trou de coulée de l'acier traversant le fond de la cuvette 21 et fermé par une busette 22', le four étant muni, du côté opposé, d'un orifice de décrassage 23 permettant l'évacuation du laitier.

Dans ce cas, la cuvette 21 peut être entourée d'une paroi sensiblement verticale en matière réfractaire, ce qui permet d'accumuler une grande quantité de métal fondu sans augmenter exagérément le diamètre de la cuvette 21.

Comme on l'a indiqué, le four est alimenté en courant continu et est associé, de préférence, à une électrode consommable unique 5, formant une cathode, qui peut descendre verticalement dans la cuve, et à une ou plusieurs électrodes fixes 50, formant anode, qui sont placées dans la sole en forme de cuvette 21. Les électrodes 5, 50, sont reliées par des conducteurs 54 aux deux bornes, respectivement négative et positive, d'une source de courant continu.

D'une façon connue et non représentée sur les Figures, l'électrode 5 est portée, de façon coulissante, par un organe de support extérieur tel qu'un bras pivotant portant également le conducteur d'alimentation, et elle est introduite verticalement dans le four en passant par un orifice 16 ménagé dans le couvercle 13.

Lorsque l'électrode 5 est retirée, l'orifice 16 peut être fermé de façon étanche par un organe de fermeture amovible 17.

En outre, le couvercle 13 est muni d'au moins un orifice 14 prolongé par une tubulure 15 qui peut être branchée de façon amovible sur un circuit d'évacuation et de traitement des gaz et fumées produits dans le four.

L'électrode 5 est descendue progressivement au fur et à mesure de la fusion de la ferraille 3 et le métal fondu forme un bain liquide 31 qui se rassemble dans la cuvette 21. Pour des raisons bien connues, le bain 31 est recouvert d'une couche de laitier 32.

Le métal liquide peut être accumulé dans la cuvette 21 jusqu'à un niveau A qui, dans l'exemple représenté, se trouve un peu en dessous de l'orifice de décrassage 23, compte tenu de l'épaisseur de la couche de laitier 72 recouvrant le bain.

Lorsque la cuvette 21 est remplie de métal jusqu'à ce niveau, le métal liquide est coulé par l'orifice 22 en ouvrant la busette 22' qui peut être du type à tiroir.

Comme on l'a indiqué plus haut, la productivité de l'installation et, en particulier, le nombre de coulées que l'on peut réaliser chaque jour, dépendent de la puissance du four et de ses dimensions, mais celles-ci ne peuvent être choisies librement.

La production d'acier, à chaque coulée, est fonction de la capacité de la cuvette 21 où s'accumule le métal, et dépend donc du profil de la cuvette, de sa section transversale S1 et de la hauteur h du niveau maximal A au-dessus du point le plus bas de la cuvette. Or, ces dimensions ne peuvent pas être choisies librement car elles dépendent des conditions d'exploitation.

D'une façon générale, en effet, le client définit la production globale souhaitée, les besoins en acier liquide de l'installation placée en aval du four, par exemple une installation de coulée continue, la puissance électrique dont il dispose et le nombre de coulées qu'il souhaite effectuer en une journée de travail.

On en déduit la quantité de métal qui doit être produite à chaque coulée, et, par conséquent, la capacité de la cuvette 21 où le métal doit s'accumuler.

Cependant, pour choisir les dimensions de la cuvette permettant d'obtenir cette capacité, il faut aussi tenir compte de certains paramètres. Par exemple, il est généralement nécessaire de respecter un certain rapport entre la profondeur du bain et le diamètre de la cuvette. En particulier, cette profondeur doit être suffisante pour permettre le brassage du métal et, le cas échéant, l'insufflation de gaz ou de produits divers par des tuyères, par exemple pour réaliser un affinage après la fusion.

D'autre part, le bain de métal est recouvert, normalement, d'une couche de laitier et l'on ne peut pas augmenter exagérément la surface d'acier au contact du laitier et, par conséquent, la section transversale de la partie supérieure de la cuvette.

Enfin, le four est placé sur un berceau et entouré de nombreux appareillages annexes. Il faut donc limiter autant que possible son encombrement. On détermine ainsi la section transversale S1 de la cuvette, le profil de celle-ci, la profondeur maximale h du bain et la hauteur totale du fond 2.

Comme on l'a indiqué, la paroi latérale de la cuve présente une section transversale S2 sensiblement égale à la section transversale maximale S1 de la cuvette qui a été ainsi définie en fonction des divers impératifs métallurgiques et d'exploitation.

Compte tenu de la hauteur H1 du bord supérieur de la cuvette au-dessus de son fond 24, on peut déterminer la hauteur H2 de la paroi latérale 12 de façon que le volume global de ferraille qui peut être introduit dans la cuve 1 représente au moins six fois la capacité en métal liquide de la cuvette 21.

Ce rapport des volumes dépend du profil de la cuvette 21. En pratique, la hauteur du volume libre au-dessus du bain, jusqu'au niveau du couvercle 13, sera d'au moins quatre fois la hauteur maximale du métal h dans la cuvette.

Cependant, on ne peut augmenter exagérément la longueur libre de l'électrode 5 pénétrant à l'intérieur de la cuve à partir de l'orifice d'introduction 16. Pour que celle-ci reste suffisamment résistante, le rapport de cette longueur L au diamètre d de l'électrode peut aller jusqu'à dix.

D'une façon générale, l'utilisation d'une électrode unique descendant dans l'axe de la cuve en réalisant un puits central dans la charge de ferraille, permet d'éliminer les risques de rupture car l'électrode est sollicitée de façon relativement symétrique. Dans ce cas, le rapport du volume de la ferraille à celui du métal liquide pourra aller jusqu'à douze mais restera, de préférence, compris entre huit et dix.

On voit donc sur les Figures que le four selon l'invention se distingue essentiellement des fours classiques par la hauteur importante de la paroi latérale 12 surmontant le fond 2 et, par conséquent, le volume très important de ferraille 3 qui peut être introduite en une seule fois dans la cuve.

D'autre part, selon une autre caractéristique importante de l'invention, le four est muni de moyens autonomes d'apport de chaleur tels qu'un brûleur 4 débouchant à la partie inférieure de la paroi latérale 12, un peu au-dessus du bord supérieur du fond 2.

Il est avantageux d'utiliser plusieurs brûleurs 4 répartis sur la périphérie de la paroi 12.

Chaque brûleur 4 est relié à des moyens d'alimentation en un combustibe tel que du gaz, du gazole ou du charbon, et en un comburant tel que de l'air ou de l'oxygène, les débits relatifs pouvant être réglés pour contrôler le rapport stoechiométrique de la flamme.

Selon la Figure 2, les moyens de chauffage additionels peuvent être constitués par au moins une tubulure d'introduction de gaz chauds débouchant à l'intérieur de la cuve 1 juste au-dessus de la jonction de la paroi latérale 12 avec le fond 2, la dite tubulure étant reliée à une chambre de combustion munie d'un brûleur et alimentée par un gaz combustible.

En outre, il est particulièrement avantageux d'aménager la cuve de façon que celle-ci soit fermée de façon sensiblement étanche lors de la fusion. A cet effet, au lieu d'utiliser, comme habituellement, un orifice de décrassage de larges dimensions fermé par une simple porte, on préfère réduire l'orifice aux dimensions juste suffisantes pour l'évacuation du laitier et le fermer de façon sensiblement étanche. Comme on l'a indiqué dans la demande WO 92.10594 du même Déposant, on peut ainsi réaliser plus facilement un équilibre de pression permettant d'éviter les entrées d'air pour améliorer le bilan énergétique du four.

Grâce à l'ensemble de ces dispositions, il est possible de réaliser le préchauffage de la ferraille à l'intérieur du four, même lorsqu'on utilise un four isolé.

Comme on l'a indiqué plus haut, en effet, il avait semblé judicieux, jusqu'à présent, de récupérer, pour le préchauffage, la chaleur des fumées en faisant passer celles-ci dans une enceinte placée à côté du four ou bien en utilisant deux fours fonctionnant alternativement pour le préchauffage et pour la fusion, avec recyclage des fumées d'un four vers l'autre.

Grâce à l'invention au contraire, étant donné que le four contient toute la ferraille nécessaire à une coulée et qu'il est muni, en outre, de brûleurs, on peut y réaliser le préchauffage et la fusion en deux étapes successives.

En effet, après chargement de la quantité voulue de ferraille 3, on ferme la voûte en utilisant le couvercle 13, on branche la tubulure 15 sur le circuit d'évacuation et de traitement et l'on alimente le brûleur 4.

Dans cette première étape de préchauffage, l'électrode 5 est maintenue au-dessus du couvercle 13 et l'orifice d'introduction 16 est fermé par l'obturateur 17, comme on l'a indiqué sur la Figure 2.

La ferraille 3 qui remplit le four 1 sur une assez grande hauteur est ainsi réchauffée par les brûleurs 4 et les fumées chaudes qui remontent à travers la charge pour s'échapper par la tubulure 15 avec les composés gazeux émis par la ferraille.

Il faut noter que, grâce à l'utilisation d'un moyen autonome de préchauffage à l'intérieur du four lui-même, les composés gazeux, souvent toxiques, se diluent uniquement dans les fumées produits par les brûleurs 4, et le débit de gaz évacué par la tubulure 15 est donc assez réduit et peut être traité dans des organes spécifiques adaptés à la nature des composés toxiques.

Lorsque la ferraille 3 a été portée à une température suffisante, on arrête le préchauffage et l'on passe à la seconde étape de fusion.

L'obturateur 17 est ouvert pour faire descendre l'électrode 5 dans la cuve. Etant donné que l'orifice 16 présente une section relativement réduite par rapport à celle du couvercle, la quantité de gaz qui peut s'échapper à ce moment est minime, d'autant plus que l'électrode 5 est immédiatement introduite dans l'orifice. Les risques de pollution sont donc très réduits et, en outre, on évite le refroidissement qui se produit nécessairement dans les dispositions classiques lorsque la ferraille préchauffée est transportée et déversée dans le four.

Dès que l'électrode consommable 5 est au contact de la ferraille, elle est branchée sur la source électrique ainsi que l'électrode fixe 50 et le contact s'établit par l'intermédiaire de la ferraille 3 et, éventuellement, d'un pied de bain de métal liquide 31 laissé dans le fond de la cuvette. Des arcs électriques se produisent entre l'électrode et la ferraille qui l'entoure et qui fond progressivement en formant un puits permettant la descente progressive de l'électrode 5, comme on l'a indiqué sur la Figure 1.

La charge de ferraille 3 comprend ainsi une partie centrale 33 dans le voisinage immédiat de l'électrode 5, dans laquelle la ferraille est portée à une très haute température par les arcs électriques et une partie annulaire 34 qui s'étend le long de la paroi latérale 12. La chaleur produite dans la partie centrale 33 est transmise par conduction et rayonnement à la partie annulaire 34 qui est également chauffée par convexion grâce à la circulation des fumées s'échappant par la tubulure 15.

En outre, il est possible et avantageux de faire fonctionner les brûleurs 4 pour augmenter encore la température des gaz s'élevant dans la partie annulaire 34.

Etant donné la hauteur particulièrement importante de la charge de ferraille, la plus grande partie de celle-ci est ainsi chauffée lors de la descente de l'électrode 5, il se produit encore une élévation de température de la ferraille surmontant le bain et descendant dans celui-ci au fur et à mesure de la fusion.

Ce processus peut se comparer à celui qui est mis en oeuvre dans les fours à chambre de stockage latérale tels que décrits précédemment mais, dans l'invention, il se produit sur l'ensemble de la charge nécessaire à une coulée, qui est introduite en une seule fois dans le four.

L'ensemble de la fusion est donc réalisée dans des conditions particulièrement économiques.

Grâce à ces dispositions, on peut d'ailleurs envisager, pour gagner du temps, de supprimer l'étape de préchauffage en faisant descendre l'électrode 5 sur la charge froide dès la fermeture du four. Dans ce cas, en effet, la puissance électrique est utilisée pour la fusion de la partie centrale 33 entourant l'électrode 5 et le préchauffage de la partie latérale 34 qui constitue l'essentiel de la charge est réalisé par les brûleurs et les fumées de fusion s'échappant par la tubulure 15.

L'invention peut s'appliquer à d'autres types de fours électriques et, notamment, à un four existant dont la partie latérale pourrait être simplement modifiée pour la mise en oeuvre des moyens revendiqués.

D'autre part, on pourrait utiliser d'autres moyens autonomes d'apport de chaleur pour le préchauffage, par exemple par résistance électrique.

## Revendications

1. Four électrique à courant continu pour la fusion d'une matière brute ferreuse telle que de la ferraille, comprenant une cuve (1) fermée à sa partie supérieure par un couvercle amovible (13) pour l'introduction d'une charge (7) de matière à fondre, au moins une électrode consommable (5) placée sensiblement dans l'axe de la cuve (1) et montée coulissante verticalement pour descendre à l'intérieur de la cuve (1) en passant par au moins un orifice (16) du couvercle (13), au moins une électrode fixe (50) placée dans le fond (2) de la cuve (1) et au moins une source de courant continu ayant deux pôles reliés respectivement à l'électrode consommable (5) et à l'électrode fixe (50), ladite cuve comprenant un fond (2) recouvert d'une sole en matière réfractaire formant une cuvette (21) ayant un bord relevé (22) et présentant une hauteur (H1) et une section transversale maximale (S1), et une paroi latérale (12) placée sensiblement dans le prolongement du bord (22) de la cuvette (21) et limitant un espace cylindrique ayant une section transversale (S2) sensiblement égale à la section maximale (S1) de la cuvette (21), la hauteur (H1) et la section transversale (S1) de la cuvette (21) étant déterminées en fonction des conditions d'exploitation, de façon que la capacité de la cuvette (21) corresponde à une quantité imposée de métal fondu à couler en une seule opération de coulée,
caractérisé par le fait que la paroi latérale (12) de la cuve (1) s'étend sur une hauteur (H2) telle que la cuve (1) puisse contenir une charge de ferraille (7) suffisante pour fournir, en une seule opération de fusion, ladite quantité imposée de métal fondu correspondant à la capacité maximale de la cuvette (21).

2. Four électrique selon la revendication 1, caractérisé par le fait que la hauteur (H2) de la paroi latérale (12) de la cuve (1) est telle que le volume limité par ladite paroi latérale (12) soit compris entre six et douze fois la capacité de la cuvette (21) correspondant à la quantité imposée de métal fondu.

3. Four électrique selon la revendication 1, caractérisé par le fait qu'il est associé à une électrode consommable unique pénétrant dans le four sur une longueur (L) à partir du couvercle et que le rapport de ladite longueur (L) au diamètre de l'électrode ne dépasse pas 10.

4. Four électrique selon l'une des revendications précédentes, caractérisé par le fait que la cuve (1) du four est associée à des moyens de chauffage additionnels pour le préchauffage de la charge à l'intérieur de la cuve (1).

5. Four électrique selon la revendication 4, caractérisé par le fait que les moyens de chauffage additionnels sont constitués par au moins un brûleur (4) débouchant à l'intérieur de la cuve (1) à la base de la paroi latérale (12).

6. Four électrique selon l'une des revendications 4 et 5, caractérisé par le fait que les moyens de chauffage additionnels sont constitués par au moins une tubulure d'introduction de gaz chauds débouchant à l'intérieur de la cuve (1) juste au-dessus de la jonction de la paroi latérale (12) avec le fond (2).

7. Four électrique selon la revendication 6, caractérisé par le fait que la tubulure d'introduction de gaz chauds est reliée à une chambre de combustion munie d'un brûleur et alimentée par un gaz combustible.

## Patentansprüche

1. Gleichstrom-Elektroofen zum Schmelzen von eisenhaltigem Rohmaterial, wie Schrott, bestehend aus einem an dessen Oberteil mit einem zum Einführen einer Charge (7) ) aus zu schmelzendem Material abnehmbaren Deckel (13) verschliessbaren Gefäss (1), mindestens einer im wesentlichen in der Achse des Gefässes (1) angeordneten, zum Absenken ins Innere des Gefässes (1), unter Durchquerung mindestens einer Öffnung (16) des Deckels (13), in senkrechter Richtung gleitbar montierten Abbrandelektrode (5), mindestens einer feststehenden am Boden (2) des Gefässes (1) angeordnete Elektrode (50) und mindestens einer Gleichstromquelle mit zwei jeweils an der Abbrandelektrode (5) und an der feststehenden Elektrode (50) angeschlossene Pole, wobei dieses Gefäss einen Boden (2), der von einem als Schüssel ausgebildeten Herd aus feuerfestem Material mit einem nach oben ragenden Rand (22), einer Höhe (H1) und einem maximalen Querschnitt (S1) abgedeckt ist, und eine Seitenwand (12) aufweist, die sich im wesentlichen in der Verlängerung des Randes (22) der Schüssel (21) erstreckt und einen zylindrischen Raum mit einem dem maximalen Querschnitt (S1) der Schüssel (21) wesentlich entsprechenden Querschnitt (S2) begrenzt, und wobei die Höhe (H1) und der Querschnitt (S1) der Schüssel (21) den Betriebsbedingungen entsprechend derart bestimmt werden, dass die Kapazität der Schüssel (21) einer vorgegebenen Menge, in einem einzigen Giessvorgang zu giessenden geschmolzenen Metalls entspricht, dadurch gekennzeichnet, dass die Seitenwand (12) des Gefässes (1) sich über eine solche Höhe (H2) so erstreckt, dass das Gefäss (1) eine ausreichende Charge aus Schrott (7) aufnehmen kann, um die entsprechend der maximalen Kapazität der Schüssel (21) vorgegebene Menge geschmolzenen Metalls in einem einzigen Schmelzvorgang zur Verfügung zu stellen.

2. Elektroofen nach Anspruch 1, dadurch gekennzeichnet, dass die Höhe (H2) der Seitenwand (12) des Gefässes (1) so gewählt ist, dass die der vorgegebene Menge geschmolzenen Metalls entsprechende Kapazität der Schüssel (21) sechs bis zwölf Mal das durch diese Seitenwand (12) begrenzte Volumen enthält.

3. Elektroofen nach Anspruch 1, dadurch gekennzeichnet, dass diesem eine vom Deckel aus über eine Länge (L) in den Ofen eindringende Abbrandelektrode zugeordnet ist, und dass das Verhältnis dieser Länge (L) zum Elektrodendurchmesser nicht grösser als 10 ist.

4. Elektroofen nach einem der vorangehenden Ansprüche, dadurch gekennzeichnet, dass dem Ofengefäss (1) zum Vorwärmen der Charge innen in dem Gefäss (1) zusätzliche Heizmittel zugeordnet sind.

5. Elektroofen nach Anspruch 4, dadurch gekennzeichnet, dass die zusätzlichen Heizmittel aus mindestens einem Brenner (4) bestehen, der unten an der Seitenwand (12) innen in das Gefäss (1) mündet.

6. Elektroofen nach einem der Ansprüche 4 und 5, dadurch gekennzeichnet, dass die zusätzlichen Heizmittel aus mindestens einem Heissgas-Zufuhrrohrstutzen bestehen, der knapp über der Verbindung der Seitenwand (12) mit dem Boden (2) innen in das Gefäss (1) mündet.

7. Elektroofen nach Anspruch 6, dadurch gekennzeichnet, dass der Heissgas-Zufuhrrohrstutzen mit einer Brennkammer in Verbindung steht, die einen Brenner aufweist und mit Brenngas eingespeist wird.

## Claims

1. Direct current electric furnace for the melting of a ferrous raw material, such as scrap iron, comprising a vessel (1) closed in its upper region by a removable cover (13) for the introduction of a charge (7) of material to be melted, at least one consumable electrode (5) which is placed in position substantially in the axis of the vessel (1) and is mounted to slide vertically so as to be lowered into the interior of the vessel (1), passing through at least one opening (16) in the cover (13), at least one stationary electrode (50) placed in position in the bottom (2) of the vessel (1), and at least one source of direct current having two poles connected, respectively, to the consumable electrode (5) and the stationary electrode (50), said vessel comprising a bottom (2) covered by a bed plate of refractory material and forming a basin (21) having a raised edge (22) and a height (H1) and a maximum cross-section (S1), and a lateral wall (12) placed in position substantially in the extension of the edge (22) of the basin (21) and defining a cylindrical space having a cross-section (S2) which is substantially equal to the maximum cross-section (S1) of the basin (21), the height (H1) and the cross-section (S1) of the basin (21) being determined according to the making conditions so that the capacity of the basin (21) corresponds to a prescribed quantity of the molten metal to cast in an alone casting operation, characterized by the fact that the lateral wall (12) of the vessel (1) extends to a height (H2) such that the vessel (1) is liable to contain a sufficient charge of scrap iron (7) to produce in a single melting operation said prescribed quantity of molten metal corresponding to the maximum capacity of the basin (21).

2. Electric furnace according to claim 1, characterized by the fact that the height (H2) of the lateral wall (12) of the vessel (1) is such that the volume defined by said lateral wall (12) is between six and twelve times the capacity of the basin (21) which capacity corresponds to the prescribed quantity of molten metal.

3. Electric furnace according to claim 1, characterized by the fact that it is associated with a single consumable electrode which penetrates into the furnace with a length (L) starting from the cover, the ratio of said length (L) to the diameter of the electrode not exceeding a factor of 10.

4. Electric furnace according to any one of the preceding claims, characterized by the fact that the vessel (1) of the furnace is associated with additional heating means for the preheating of the charge within the interior of the vessel (1).

5. Electric furnace according to claim 4, characterized by the fact that the additional heating means comprise at least one burner (4) which opens into the interior of the vessel (1) at the bottom of the lateral wall (12).

6. Electric furnace according to any one of claims 4 and 5, characterized by the fact that the additional heating means comprise at least one pipe for the injection of hot gas which opens up into the interior of the vessel (1) immediately above the junction of the lateral wall (12) and the bottom (2).

7. Electric furnace according to claim 6, characterized by the fact that the pipe for the injection of hot gas is connected to a combustion chamber which is provided with a burner and is supplied with fuel gas.
